# EUROPEAN PATENT SPECIFICATION

(11) **EP 2 963 511 B1**
(45) Date of publication and mention of the grant of the patent: **12.04.2017**
(21) Application number: 14306105.9
(22) Date of filing: 04.07.2014
(51) Int. Cl.: G05B 19/042, G05B 9/02

(54) **Method and device for the validation of an instruction related to railway traffic**
Verfahren und Vorrichtung für die Validierung einer Anweisung, die verwandt mit dem Eisenbahnverkehr ist
Méthode et appareil pour la validation d'une instruction liée au trafic ferroviaire

(43) Date of publication of application: 06.01.2016
(73) Proprietor: ALSTOM Transport Technologies, 93400 Saint-Ouen (FR)
(72) Inventor: Schettini, Gianluca, 70026 MODUGNO Z.I. (BA) (IT)
(74) Representative: Lavoix

(56) References cited:
- EP-A2- 1 058 462
- WO-A1-2011/128210
- WO-A2-99/31955
- US-A1- 2007 143 624

## Description

The present invention concerns a method for the validation of an instruction of the type comprising the steps of:
- generating a confirmation code;
- displaying to an operator a displayed image comprising the confirmation code;
- applying the instruction only if the operator inputs the displayed confirmation code.

The invention applies to the field of railway monitoring.

In the field of railway monitoring and control, it is known to use a confirmation device to confirm instructions that have been inputted by an operator. Such instructions are usually meant to affect the state of at least a part of a railway network. Therefore, these instructions may have an important impact on railway traffic. Hence, to avoid safety issues, the instructions that are transmitted to the railway network are only the instructions that have been validated by the operator.

WO2011/128210 describes a method and a device for the validation of an instruction. In this method, a confirmation code is generated in a non-machine readable way and is displayed to the operator, for instance by displaying a bitmap image comprising the confirmation code. The operator then needs to type the displayed confirmation code in order to confirm the validity of the inputted instructions and to allow their execution. Such systems are meant to prevent the operator from involuntarily confirming incorrect instructions, and also to prevent an involuntary automatic confirmation made by the system instead of the operator.

However, such a method is not totally satisfying.

Indeed, in such a method, the operator needs to assume that the image that is displayed comprises the correct confirmation code that is expected by the confirmation device, and that no error has occurred during the generation of said image. Hence, the safety level for such a device can be improved.

A purpose of the invention is to provide a method for the validation instructions that allows the operator to validate, in a safer way, the instructions that he has inputted.

To this end, the invention concerns a method of the above-mentioned type, comprising the steps of:
- sending the generated confirmation code to at least two independent processing units;
- with each processing unit, calculating an image comprising the displayed confirmation code;
- comparing the calculated images;
- if an absolute majority of the calculated images are identical, calculating the displayed image, the displayed image being a function of the identical images.

Thanks to the invention, the operator can visualize the instructions he inputs and to confirm said instructions with a safety level of safety and reliability.

According to further aspects of the invention which are advantageous but not compulsory, such a method may incorporate one or several of the following features:
- the method comprises the steps of:
   - waiting for an input from an input interface;
   - detecting an inputted character;
   - sending information related to the inputted character to all the processing units;
   - with each processing unit, memorizing the inputted character;
   - with each processing unit, calculating an image comprising the displayed confirmation code, the inputted character and the previously memorized characters, if any;
   - comparing the calculated images;
   - if an absolute majority of the calculated images are identical, calculating the displayed image, the displayed image being a function of the identical images;
- at least two processing units are able to calculate the image comprising the displayed confirmation code in an identical way;
- if a majority of the calculated images are different, a predetermined image is displayed on the screen;
- if a majority of the images generated by the processing units are different, a noise image is displayed on the screen.

The invention also concerns a device for the validation an instruction, comprising:
- a confirmation unit able to generate a confirmation code;
- a display able to display a displayed image comprising the confirmation code;
- means for applying the instruction only if the operator inputs the displayed confirmation code;
the device comprising:
- at least two independent processing units adapted to receive the generated confirmation code, each processing unit being able to calculate an image comprising the displayed confirmation code;
- a workstation adapted to compare the calculated images, the workstation being also able to calculate the displayed image if an absolute majority of the calculated images are identical, the displayed image being a function of the identical images.

The invention will now be explained in correspondence with the annexed figures, and as an illustrative example, without restricting the object of the invention. In the annexed figures:
- figure 1 is a schematic view of a monitoring device according to the invention;
- figure 2 is a flowchart of a method implemented by the monitoring device of figure 1;
- figure 3 is an example of an image displayed on a display of the monitoring device of figure 1 during a step of the method; and
- figure 4 is the view of figure 3 during a following step of the method.

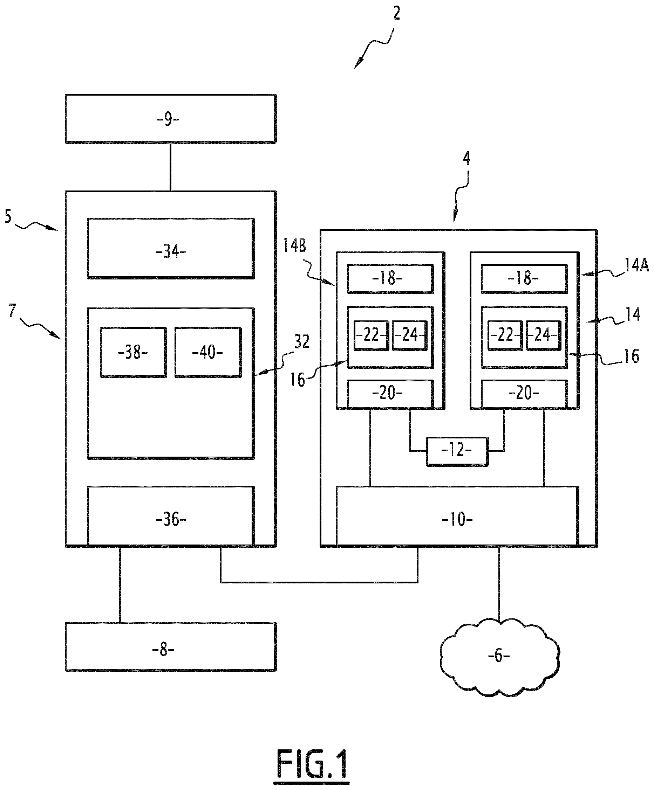

A device 2 for the validation of an instruction according to the invention, also called "monitoring device", is shown on figure 1. The monitoring device 2 is adapted to allow an operator to enter instructions and to confirm said instructions in a safe way.

By "in a safe way", we mean in a way that is compliant with the safety norm CENELEC EN 50128 for Safety Integrity Level 4 ("SIL4").

The monitoring device 2 comprises an interlocking computer 4 and an operator console 5. The interlocking computer 4 is connected to the operator console 5.

The interlocking computer 4 is connected to at least a part of a railway network 6 to collect data related to the railway traffic on said part of the railway network 6. The interlocking computer 4 is also able to collect data related to the state of switches and movable appliances that belong to said part of the railway network 6, and to modify said states.

The interlocking computer 4 is able to apply orders to switches and movable appliances of the railway network 6 to change their states.

The operator console 5 comprises a workstation 7, the input interface 8 and a display 9. The input interface 8 and the display 9 are connected to the workstation 7.

The operator console 5 is able to allow an operator to input instructions through the input interface 8, in order to make the interlocking computer 4 modify the state of the switches and movable appliances.

The interlocking computer 4 is able to generate a confirmation code that the operator needs to input in order to confirm the inputted instructions.

The operator console 5 is also able to allow the operator to input a code through the input interface 8, in order to confirm the inputted instructions. If the inputted code matches with the displayed confirmation code, then the inputted instructions are confirmed and applied.

The interlocking computer 4 comprises an emitter-receiver 10, a confirmation unit 12 and a plurality of independent processing units 14. For instance, as shown on figure 1, the interlocking computer 4 comprises a first processing unit 14A and a second processing unit 14B.

The emitter-receiver 10 is able to receive data from the railway network 6. The emitter-receiver 10 is also able to emit data to the operator console 5, and to receive data from the operator console 5.

The confirmation unit 12 is able to generate a combination of characters, for instance a random combination of characters, to form the confirmation code. Preferably, the confirmation unit 12 is able to generate the confirmation code from a first set of characters. For instance, the first set is a set of alphanumerical characters. For example, the confirmation code is a combination of four alphanumerical characters.

Each processing unit 14A, 14B is connected to the confirmation unit 12 to receive the generated confirmation code. Each processing unit 14A, 14B is able to generate images, preferably bitmap images. Preferably, at least a part of the generated images comprise the confirmation code. Each processing unit 14 is able to transmit the generated images to the operator console 5 through the emitter-receiver 10.

During normal operating, the processing units 14A, 14B are adapted to generate identical outputs if they are provided with identical inputs. The image generation by the processing units 14 shall be described hereafter.

As described earlier, the input interface 8 is able to allow an operator to input instructions to make the interlocking computer 4 modify the state of the switches and movable appliances. The input interface 8 is also able to allow the operator to input a code to confirm the inputted instructions. For instance, the input interface 8 comprises a second set of character keys corresponding to a second set of predetermined characters. The second set of characters includes the first set of characters.

For instance, the input interface 8 comprises alphabetical character keys and numerical character keys. For example, the input interface 8 comprises ten numerical character keys. For example, the input interface 8 comprises twenty-six alphabetical character keys.

The display 9 is adapted to display images that depend on the images generated by the interlocking computer 4.

Each processing unit 14A, 14B comprises a memory 16 to store software programs, a processor 18 to run the programs and an emitter-receiver 20.

The memory 16 is adapted to store a calculation program 22 and a transmission program 24.

The calculation program 22 is adapted to generate images, for instance bitmap images. The calculation program 22 is adapted to generate images that comprise information related to railway data collected by the interlocking computer 4. The calculation program 22 is also adapted to generate images that comprise the confirmation code received from the confirmation unit 12. Furthermore, the calculation program 22 is adapted to generate images that comprise information related to data received from the operator console 5, for instance images that comprise the characters inputted by the operator through the inputting interface 8 of the operator console 5.

The transmission program 24 is able to transmit the generated images to the operator console 5.

The processor 18 is able to run the software programs stored in the memory 16.

The emitter-receiver 20 of each processing unit 14A, 14B is capable of receiving data from the confirmation unit 12 and from the emitter-receiver 10 of the interlocking computer 4. The emitter-receiver 20 of each processing unit 14A, 14B is also capable of emitting the generated images to the emitter-receiver 10 of the interlocking computer 4.

The workstation 7 comprises a memory 32 to store software programs, a processor 34 to run the software programs and an emitter-receiver 36.

The memory 32 is adapted to store a transmission program 38 and a comparison program 40.

The transmission program 38 is able to send to the interlocking computer 4 data related to the characters inputted by the operator through the input interface 8. The transmission program 38 is also able to receive images from the interlocking computer 4.

The comparison program 40 is adapted to compare the images received from the interlocking computer 4 by the transmission program 38. The comparison program 40 is also able to send to the display 9 a displayed image that depends on the images received from the interlocking computer 4.

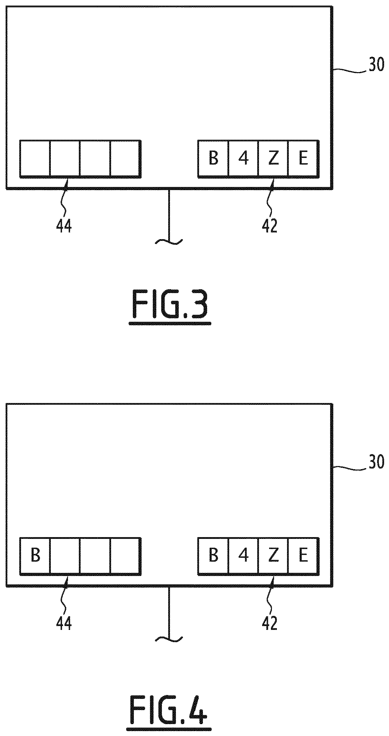

As shown on figures 3 and 4, a valid displayed image comprises a code window 42 and an inputting window 44. A "valid image" shall be defined hereafter. The code window 42 is adapted to display the confirmation code. The inputting window 44 is adapted to display the characters that have been inputted by the operator to confirm the instructions.

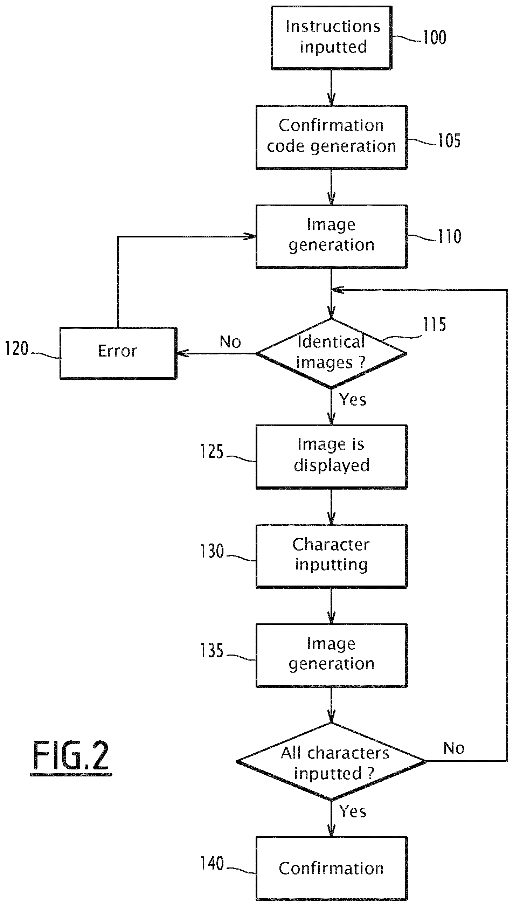

The operating mode of the monitoring device 2 will be explained hereafter, through the presentation of the method illustrated in figure 2.

During a first step 100, an operator inputs an instruction through the input interface 8 or through another interface (not shown) connected to the workstation 7. For instance, the operator inputs an instruction to modify the state of an element of the railway network 6.

During a following step 105, the instruction is transmitted to the interlocking computer 4. The interlocking computer 4 stores the instruction. The confirmation unit 12 of the interlocking computer 4 generates a random confirmation code. For instance, the confirmation code is "B4ZE".

Then, the confirmation unit 12 sends the confirmation code to each processing unit 14A, 14B of the interlocking computer 4.

During a following step 110, the calculation program 22 of each processing unit 14 of the interlocking computer 12 generates a bitmap image comprising the confirmation code. Then the transmission program 24 of each processing unit 24 sends the generated image to the operator console 5 through the emitter-receiver 10. The emitter-receiver 10 of the interlocking computer 4 then sends every generated image to the operator console 5.

During a following step 115, the transmission program 38 of the workstation 7 receives the generated images through the emitter-receiver 36 and the comparison program 40 of the workstation compares the received images.

As the confirmation code is part of a bitmap image, the confirmation code is not machine-readable. Particularly, the software programs of the workstation 7 cannot read the confirmation code.

If the received images are different from one another, then during a following step 120, the comparison program 40 sends a predetermined error image to the display 9. For instance, the predetermined image is a bitmap image comprising a warning message.

Then, the interlocking computer 4 generates new images comprising the confirmation code, in accordance with step 110.

In another embodiment, during step 120, the comparison program 40 sends to the display 9 an image that consists of noise. Such an image is said "noise image".

The value of each pixel of the image is a random value within an allowed range of values.

If the received images are identical to each other, said images form a "valid image". Then during a following step 125, the comparison program 40 sends the valid image onto the display 9, as shown on figure 3.

The operator is then able to input the confirmation code during an inputting stage 130.

During the inputting stage 130, if the operator had not previously inputted a character of the displayed confirmation code, then the operator inputs, through the input interface 8, a character that corresponds to the first character of the confirmation code.

If the operator had previously inputted one or more characters of the confirmation code, then the operator inputs a character corresponding to the character of the confirmation code that follows the last inputted character.

For each inputted character, the operator console 5 sends to the interlocking computer 4 data that are related to the inputted character. For instance, the operator console 5 sends the value of the inputted character, or a unique identifier of the inputted character.

Preferably, the operator console 5 sends to the interlocking computer 4 data that are related to the inputted character even if the inputted character is not part of the displayed confirmation code.

During a following step 135, the calculation program 22 of each processing unit 14A, 14B of the interlocking computer 4 generates an image comprising the code and the inputted characters. Then the transmission program 24 of each processing unit 14A, 14B sends the generated image to the operator console 5.

Then, the comparison program 40 of the workstation 7 compares the received images, in accordance with step 115. An example of a valid image where the operator has inputted the first character, that is to say "B", is shown on figure 4.

Steps 115 to 135 are repeated until the number of characters inputted by the operator is equal to the number of characters of the confirmation code and a valid image comprising all the inputted characters is displayed on the display 9. The inputted characters then form an "inputted code".

If, during a comparison step 140, the inputted code is identical to the confirmation code, then the instruction is confirmed during a confirmation step 145.

If, during the confirmation step 140, the inputted code is different from the confirmation, then a warning message is sent to the operator according to step 120. The operator then inputs again the instruction through the input interface, in accordance with step 100.

In another embodiment, the interlocking computer 4 comprises at least three processing units 14. In this case, during step 115, if an absolute majority of images are identical to one another, then said identical images form the valid image.

## Claims

1. A method for the validation of an instruction related to the state of at least part of a railway network, comprising the steps of:
- generating (105) a confirmation code;
- displaying (125) to an operator a displayed image comprising the confirmation code, said confirmation code forming a displayed confirmation code;
- applying the instruction only if the operator inputs the displayed confirmation code;
**characterized in that** it comprises the steps of:
- sending the generated confirmation code to at least two independent processing units (14A, 14B), the processing units (14A, 14B) being adapted to generate identical outputs when provided with identical inputs;
- with each processing unit (14A, 14B), calculating (110) an image comprising the confirmation code;
- comparing (115) the calculated images;
- if an absolute majority of the calculated images are identical, calculating the displayed image, the displayed image being a function of the identical images.

2. A method according to claim 1, **characterized in that** it comprises the steps of:
- waiting for an input from an input interface (8);
- detecting an inputted character;
- sending information related to the inputted character to all the processing units (14A, 14B);
- with each processing unit (14A, 14B), memorizing the inputted character;
- with each processing unit (14A, 14B), calculating an image comprising the displayed confirmation code, the inputted character and the previously memorized characters, if any;
- comparing (115) the calculated images;
- if an absolute majority of the calculated images are identical, calculating the displayed image, the displayed image being a function of the identical images.

3. A method according to claim 1 or 2, **characterized in that** at least two processing units (14A, 14B) are able to calculate the image comprising the displayed confirmation code in an identical way.

4. A method according to any one of the preceding claims, **characterized in that**, if a majority of the calculated images are different, a predetermined error image is displayed (120) on the screen.

5. A method according to any one of claims 1 to 3, **characterized in that**, if a majority of the images generated by the processing units are different, a noise image is displayed (120) on the screen.

6. A device for the validation an instruction related to the state of at least part of a railway network, comprising:
- a confirmation unit (12) able to generate a confirmation code;
- a display (9) able to display a displayed image comprising the confirmation code, said confirmation code forming a displayed confirmation code;
- means (4) for applying the instruction only if the operator inputs the displayed confirmation code;
**characterized in that** it comprises:
- at least two independent processing units (14A, 14B) adapted to receive the generated confirmation code, each processing unit (14A, 14B) being able to calculate an image comprising the confirmation code, the processing units (14A, 14B) being adapted to generate identical outputs when provided with identical inputs;
- a workstation (7) adapted to compare the calculated images, the workstation (7) being also able to calculate the displayed image if an absolute majority of the calculated images are identical, the displayed image being a function of the identical images.

## Patentansprüche

1. Verfahren zum Validieren eines Befehls, der einen Zustand von mindestens einem Teil eines Eisenbahnnetzes betrifft, aufweisend die Schritte:
- Erzeugen (105) eines Bestätigungscodes;
- Anzeigen (125), einem Operator, eines angezeigten Bildes, das den Bestätigungscode aufweist, wobei der Bestätigungscode einen angezeigten Bestätigungscode bildet;
- Anwenden des Befehls nur, wenn der Operator den angezeigten Bestätigungscode eingibt;
dadurch charakterisiert, dass es die Schritte aufweist:
- Senden des erzeugten Bestätigungscodes an mindestens zwei unabhängige Verarbeitungseinheiten (14A, 14B), wobei die Verarbeitungseinheiten (14A, 14B) eingerichtet sind, identische Ausgaben zu erzeugen, wenn ihnen identische Eingaben zugeführt werden;
- mit jeder Verarbeitungseinheit (14A, 14B) Berechnen (110) eines Bildes, das den Bestätigungscode aufweist;
- Vergleichen (115) der berechneten Bilder;
- falls eine absolute Mehrheit der berechneten Bilder identisch sind, Berechnen des angezeigten Bilds, wobei das berechnete Bild eine Funktion von identischen Bildern ist.

2. Verfahren gemäß Anspruch 1, dadurch charakterisiert, dass es die Schritte aufweist:
- Warten auf eine Eingabe von einer Eingabeschnittstelle (8);
- Detektieren eines eingegebenen Zeichens;
- Senden von Information, die das eingegebene Zeichen betrifft, an alle Verarbeitungseinheiten (14A, 14B);
- mit jeder Verarbeitungseinheit (14A, 14B) Speichern des eingegebenen Zeichens;
- mit jeder Verarbeitungseinheit (14A, 14B) Berechnen eines Bildes, das den angezeigten Bestätigungscode, das eingegebene Zeichen und falls vorhanden die zuvor gespeicherten Zeichen aufweist;
- Vergleichen (115) der berechneten Bilder;
- falls eine absolute Mehrheit der berechneten Bilder identisch ist, Berechnen des angezeigten Bildes, wobei das angezeigte Bild eine Funktion der identischen Bilder ist.

3. Verfahren gemäß Anspruch 1 oder 2, dadurch charakterisiert, dass mindestens zwei Verarbeitungseinheiten (14A, 14B) in der Lage sind, das Bild, das den angezeigten Bestätigungscode aufweist, auf identische Weise zu berechnen.

4. Verfahren gemäß irgendeinem der vorhergehenden Ansprüche, dadurch charakterisiert, dass, falls eine Mehrheit der berechneten Bilder unterschiedlich sind, ein vorgegebenes Fehlerbild auf dem Bildschirm angezeigt wird (120).

5. Verfahren gemäß irgendeinem der Ansprüche 1 bis 3, dadurch charakterisiert, dass, wenn eine Mehrheit der von den Verarbeitungseinheiten erzeugten Bilder unterschiedlich ist, ein Rauschbild auf dem Bildschirm angezeigt wird (120).

6. Vorrichtung zum Validieren eines Befehls, der einen Zustand von mindestens einem Teil eines Eisenbahnnetzes betrifft, aufweisend:
- eine Bestätigungseinheit (12), die in der Lage ist, einen Bestätigungscode zu erzeugen;
- eine Anzeige (9), die in der Lage ist, ein angezeigtes Bild, das den Bestätigungscode aufweist, anzuzeigen, wobei der Bestätigungscode einen angezeigten Bestätigungscode bildet;
- Mittel (4) zum Anwenden des Befehls nur, wenn der Operator den angezeigten Bestätigungscode eingibt; dadurch charakterisiert, dass sie aufweist:
- mindestens zwei unabhängige Verarbeitungseinheiten (14A, 14B), die eingerichtet ist, den erzeugten Bestätigungscode zu empfangen, wobei jede Verarbeitungseinheit (14A, 14B) in der Lage ist, ein Bild zu berechnen, das den Bestätigungscode aufweist, wobei die Verarbeitungseinheiten (14A, 14B) eingerichtet sind, identische Ausgaben zu erzeugen, wenn ihnen identische Eingaben zugeführt werden;
- ein Bedienrechner (7), der eingerichtet ist, die berechneten Bilder zu vergleichen, wobei der Bedienrechner (7) auch in der Lage ist, das berechnete Bild zu berechnen, wenn eine absolute Mehrheit der berechneten Bilder identisch ist, wobei das angezeigte Bild eine Funktion der identischen Bilder ist.

## Revendications

1. Procédé de validation d'une instruction connexe à l'état d'au moins une partie d'un réseau ferroviaire, comprenant les étapes ci-dessous consistant à :
- générer (105) un code de confirmation ;
- présenter (125), à un opérateur, une image affichée comprenant le code de confirmation, ledit code de confirmation formant un code de confirmation affiché ;
- appliquer l'instruction uniquement si l'opérateur saisit le code de confirmation affiché ;
**caractérisé en ce qu'**il comprend les étapes ci-dessous consistant à :
- envoyer le code de confirmation généré à au moins deux unités de traitement indépendantes (14A, 14B), les unités de traitement (14A, 14B) étant aptes à générer des sorties identiques lorsque leur sont fournies des saisies identiques ;
- avec chaque unité de traitement (14A, 14B), calculer (110) une image comportant le code de confirmation ;
- comparer (115) les images calculées ;
- si les images calculées sont identiques dans leur absolue majorité, calculer l'image affichée, l'image affichée étant en fonction des images identiques.

2. Procédé selon la revendication 1, **caractérisé en ce qu'**il comprend les étapes ci-dessous consistant à :
- attendre une saisie à partir d'une interface de saisie (8) ;
- détecter un caractère saisi ;
- envoyer des informations connexes au caractère saisi à la totalité des unités de traitement (14A, 14B) ;
- avec chaque unité de traitement (14A, 14B), mémoriser le caractère saisi ;
- avec chaque unité de traitement (14A, 14B), calculer une image comprenant le code de confirmation affiché, le caractère saisi et les caractères mémorisés précédemment, le cas échéant ;
- comparer (115) les images calculées ;
- si les images calculées sont identiques dans leur absolue majorité, calculer l'image affichée, l'image affichée étant en fonction des images identiques.

3. Procédé selon la revendication 1 ou 2, **caractérisé en ce qu'**au moins deux unités de traitement (14A, 14B) sont en mesure de calculer l'image comprenant le code de confirmation affiché d'une manière identique.

4. Procédé selon l'une quelconque des revendications précédentes, **caractérisé en ce que**, si les images calculées sont majoritairement différentes, une image d'erreur prédéterminée est affichée (120) à l'écran.

5. Procédé selon l'une quelconque des revendications 1 à 3, **caractérisé en ce que**, si les images générées par les unités de traitement sont majoritairement différentes, une image de bruit est affichée (120) à l'écran.

6. Dispositif destiné à valider une instruction connexe à l'état d'au moins une partie d'un réseau ferroviaire, comprenant :
- une unité de confirmation (12) apte à générer un code de confirmation ;
- un affichage (9) apte à présenter une image affichée comprenant le code de confirmation, ledit code de confirmation formant un code de confirmation affiché ;
- un moyen (4) pour appliquer l'instruction uniquement si l'opérateur saisit le code de confirmation affiché ;
**caractérisé en ce qu'**il comprend :
- au moins deux unités de traitement indépendantes (14A, 14B) aptes à recevoir le code de confirmation généré, chaque unité de traitement (14A, 14B) étant apte à calculer une image comprenant le code de confirmation, les unités de traitement (14A, 14B) étant aptes à générer des sorties identiques lorsque leur sont fournies des saisies identiques ;
- une station de travail (7) apte à comparer les images calculées, la station de travail (7) étant également en mesure de calculer l'image affichée si les images calculées sont identiques dans leur absolue majorité, l'image affichée étant en fonction des images identiques.
